# EUROPEAN PATENT APPLICATION

(11) **EP 1 936 485 A2**
(43) Date of publication of application: **25.06.2008**
(21) Application number: 07254968.6
(22) Date of filing: 20.12.2007
(51) Int. Cl.: G06F 3/048

(54) **Character entry by inputting strokes through a circular input device**

(30) Priority: 20.12.2006 US 613362
(71) Applicant: Computime Ltd., Wanchai, Hong Kong (HK)
(72) Inventor: Lei, Kairy Kai, Nanshan District Shenzhen (CN); Ha, Wai-leung, Pokfulam Hong Kong (CN)
(74) Representative: Piésold, Alexander James

(57) **Abstract**

The present invention provides methods, apparatuses, and computer-readable media for inputting character information from a circular input device (101). Character information is provided by a user drawing at least one input stroke on the circular input device (101). The circular input device is partitioned into a plurality of regions (201, 202, 203, 204, 205), where each region is associated with a numerical value. When an input stroke (251, 253) is detected, corresponding numerical values are obtained. A code is obtained from the sequence, and a character is extracted from the code. Also, character strokes (251, 253) may be obtained with at least one input stroke from a circular input device (101), where a character contains a plurality of character strokes. Different operational modes may be selected by a user pressing a predefined location of a circular input device (101) so that a user may enter different languages, including English and Chinese.

## Description

The present invention relates generally to inputting character information from a circular input device.

Electronic equipment, e.g., MP3 players and wireless communication telephones, are becoming smaller with additional user capability. Consequently, a user may need to enter more data into the electronic equipment having a small input entry device. A popular input device is a circular input device that is often used with musical playing instruments.

Because of the need to input greater amounts of data into smaller electronic equipment, there is a real need in the marketplace to enter alphabetical and numerical character through a circular input device.

The present invention provides methods, apparatuses, and computer-readable media for inputting character information from a circular input device. Character information is provided by a user drawing at least one input stroke on the circular input device.

According to one aspect of the invention there is provided a method for inputting a character with a circular input device , comprising: (a) partitioning the circular input device into a plurality of regions; (b) detecting a first input stroke from the circular input device, the first input stroke traversing at least one region of the plurality of regions; (c) obtaining a corresponding numerical value corresponding to a corresponding region, the corresponding region being one of the at least one region; and (d) when in a first input mode, repeating (b)-(c) until a first code is obtained, the first code comprising a first sequence of numerical values.

The invention also extends to corresponding apparatus and computer readable media.

Thus with one aspect of the invention, a circular input device is partitioned into a plurality of regions, where each region is associated with a numerical value. A user draws an input stroke by traversing at least one region of the circular input device. When an input stroke is detected, corresponding numerical values are obtained. When a code is obtained from the sequence, a character is extracted from the code.

With another aspect of the invention, character strokes are obtained from at least one input stroke from a circular input device. A character, e.g., a Chinese character, contains a plurality of character strokes.

With another aspect of the invention, different operational modes may be selected by a user pressing a predefined location of a circular input device. With embodiments of the invention, a user may enter either English characters or Chinese characters through a circular input device.

With another aspect of the invention, a circular input device is partitioned into at least four regions, where the first, second, third, and fourth regions are associated with first, second, third, and fourth numerical values, respectively.

With another aspect of the invention, a region of a circular input is associated with a center portion of the circular input device. A corresponding numerical value is recognized when a user presses a center input touch pad.

With another aspect of the invention, an error condition may be detected if an inputted code is not a valid code.

With another aspect of the invention, a time pause is detected between input strokes if a sufficiently large time duration occurs between the input strokes. The time pause may be included when determining an entered code.

With another aspect of the invention, a code may be reduced if a sequence contains redundant information. In such a case, the number of members in the sequence may be reduced while preserving the uniqueness of the code.

The foregoing summary of the invention, as well as the following detailed description of exemplary embodiments of the invention, is better understood when read in conjunction with the accompanying drawings, which are included by way of example, and not by way of limitation with regard to the claimed invention.

Figure 1 shows an apparatus that inputs a character through a circular input device in accordance with an embodiment of the invention.

Figure 2 shows a circular input device in accordance with an embodiment of the invention.

Figure 3 shows exemplary user scenarios for inputting characters of the English language through a circular input device in accordance with an embodiment of the invention.

Figure 4 shows exemplary user scenarios for inputting characters of the Chinese language through a circular input device in accordance with an embodiment of the invention.

Figure 5 shows a table in which codes correspond to different characters in accordance with an embodiment of the invention.

Figure 6 shows exemplary user scenarios for inputting characters of the English language through a circular input device in accordance with an embodiment of the invention.

Figure 7 shows a table in which codes correspond to different characters in accordance with an embodiment of the invention.

Figure 8 shows an exemplary user scenario illustrating code reduction in accordance with an embodiment of the invention.

Figure 9 shows an exemplary user scenario for inputting character strokes with input strokes in accordance with an embodiment of the invention.

Figure 10 shows a flow diagram for obtaining input strokes through a circular input device and determining a code of a character in accordance with an embodiment of the invention.

The following is separated by subheadings for the benefit of the reader. The subheadings include: Terms, Architecture of Platform, Exemplary Circular Input Device, Mapping between Characters and Codes, Processing of Input Strokes.

### Terms

*Input stroke -* a contiguous (uninterrupted) curve drawn on the circular input device.

*Character stroke -* a portion of a character. A character comprises a collection of lines and curves.

*Alphabetical character -* a symbol used in a writing system for a language. A character represents a sound or a thing and may be phonetic, ideographic, or pictographic.

*Numerical character -* symbol that represents a number.

### Architecture of Platform

Embodiments of the invention enable a user to input alphabetical characters (e.g., contained in the English language) into a device that interfaces with a circular input device.

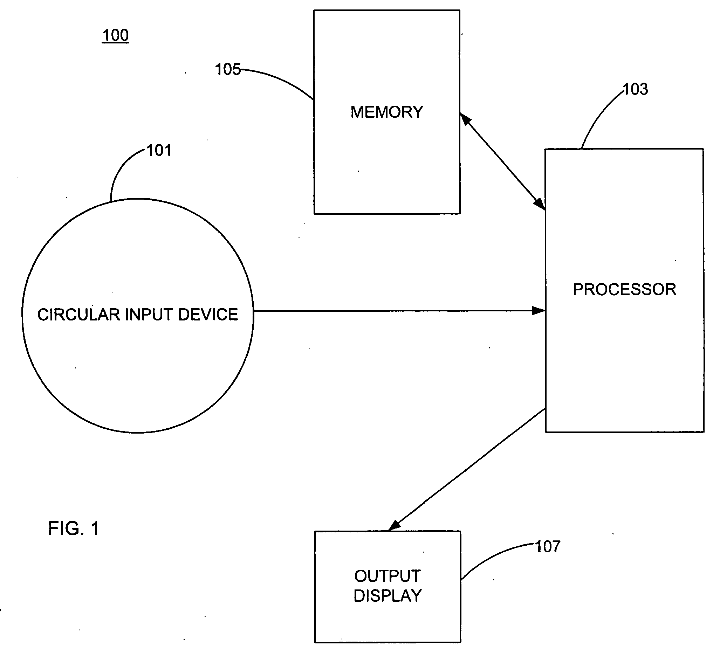

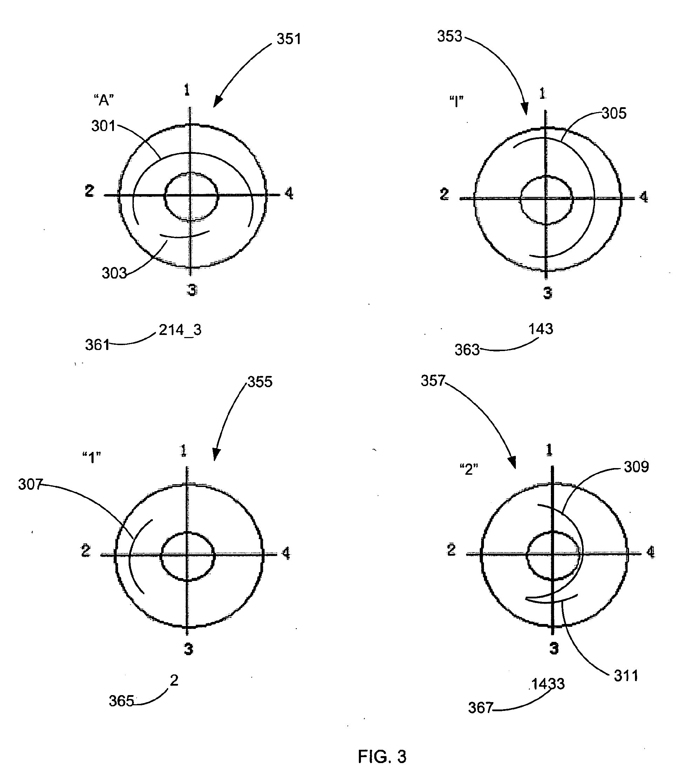

Figure 1 shows apparatus 100 that inputs a character through circular input device 101 in accordance with an embodiment of the invention. Circular input device 101 provides character information to processor 103, which also interfaces to memory. Circular input device 101 captures information descriptive of input strokes that are drawn by a user to provide character information to processor 103. (Exemplary user scenarios are discussed in Figures 3, 4, and 6 to illustrate a user entering input strokes.)

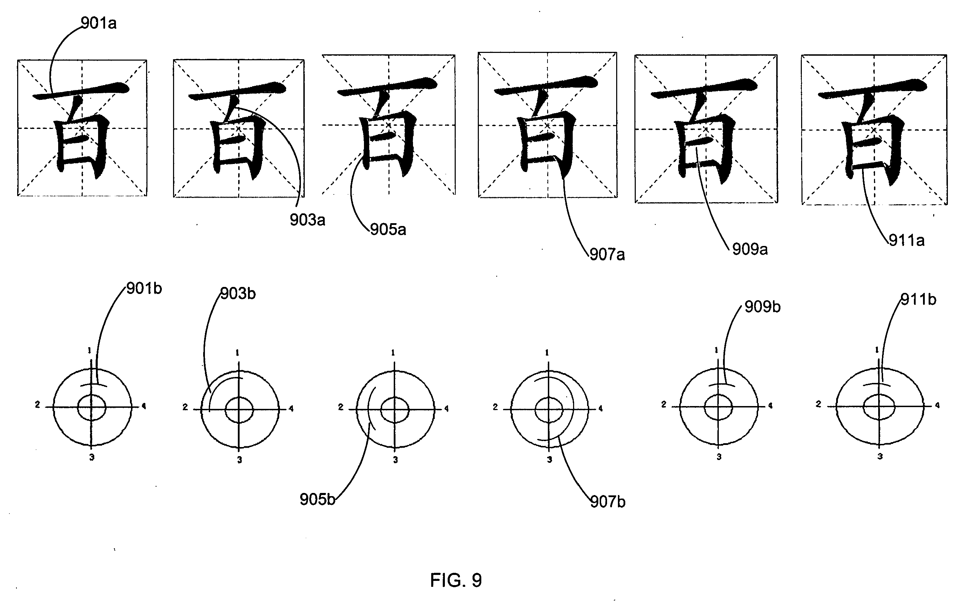

The captured information from circular input device 101 appears as a set of numerical values (a code), which processor 103 uses to convert to a character. In an embodiment of the invention, memory 105 contains a lookup table that maps a code to a corresponding character. A character may be an alphabetical character or a numerical character. Moreover, a code may be mapped to a character stroke, for example as will be discussed with Figure 9, in accordance with an embodiment of the invention. A character stroke is a portion of a drawn character, e.g., a horizontal or vertical line segment. Mapping a code to a character stroke rather than directly with a character may facilitate data entry by a user when the number of alphabetical characters of the associated language is large.

### Exemplary Circular Input Device

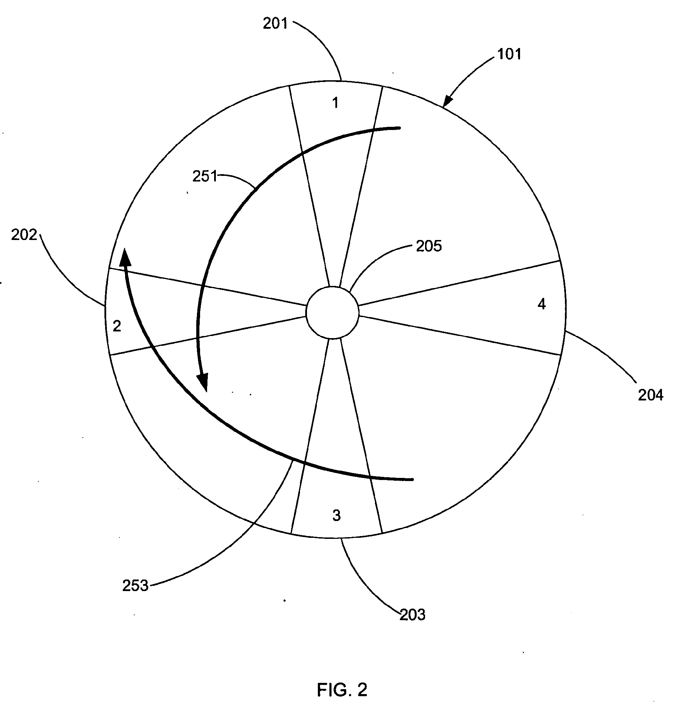

Figure 2 shows apparatus 100 that includes circular input device 101 in accordance with an embodiment of the invention. Circular input device 101 may be incorporated into different types of devices, including musical storage instruments, remote control devices, and video devices. As shown in Figure 2, circular input device 101 is partitioned into a plurality of regions, including regions 201, 202, 203, and 204. The angular width of a region (e.g., 90 degrees or a quadrant) may be adjusted to accommodate different numerical values. For example, regions 201-204 may correspond to numerical values of 1, 2, 3, and 4, respectively. Since input stroke 251 traverses region 201 followed by region 202, input stroke 251 may be translated as a numerical sequence {1, 2}.

One of the embodiments of the circular input device should make with small extrusion line for four quadrants to help ease of reference by end user.

In the user scenario shown in Figure 2, the user subsequently draws input stroke 253, which traverses region 203 followed by region 202. Thus, input stroke 253 is interpreted as sequence {3, 2}. Thus, the numerical sequence associated with input strokes 251 and 253 is {1, 2, _, 3, 2}. Because the input strokes 251 and 253 are sufficiently separated, embodiments of the invention may interpret a time duration between consecutive input strokes as being a time pause (designated as "_"). In such as a case sequence {1, 2, _, 3, 2} would be interpreted differently than {1, 2, 3, 4}. (However, there are embodiments of the invention that may disregard a time pause.) A time pause may be discarded or may be interpreted as conveying information when analyzing the sequence to determine a code. As will be discussed, once the code is determined, processor 103 may map the code to a character (e.g., "A" or "7").

While a direction is associated with an input stroke, embodiments of the invention may support a collection of codes that is invariant to the direction of the input strokes. For example, a collection of codes may be specified so that a valid sequence in a different order is not a valid sequence.

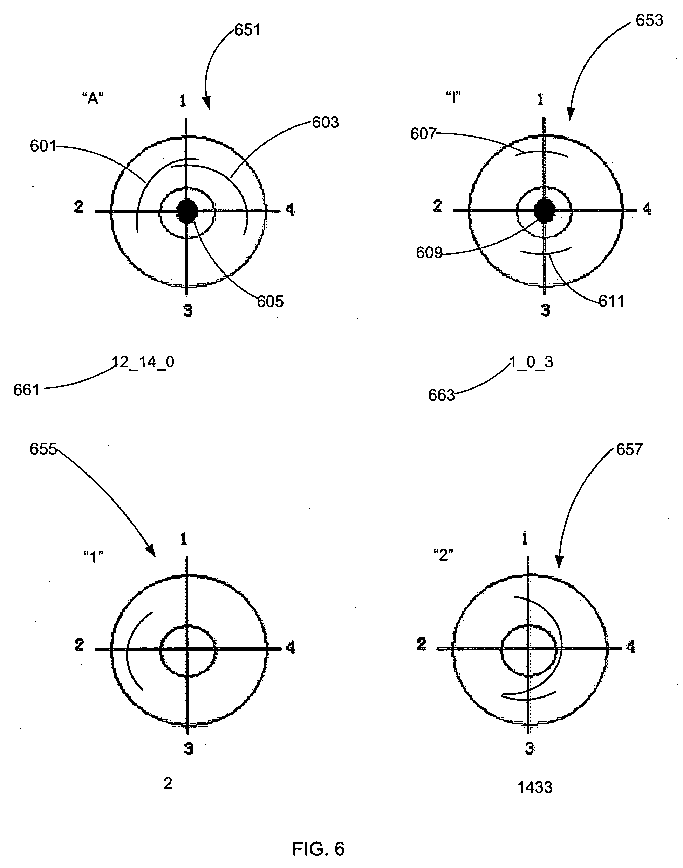

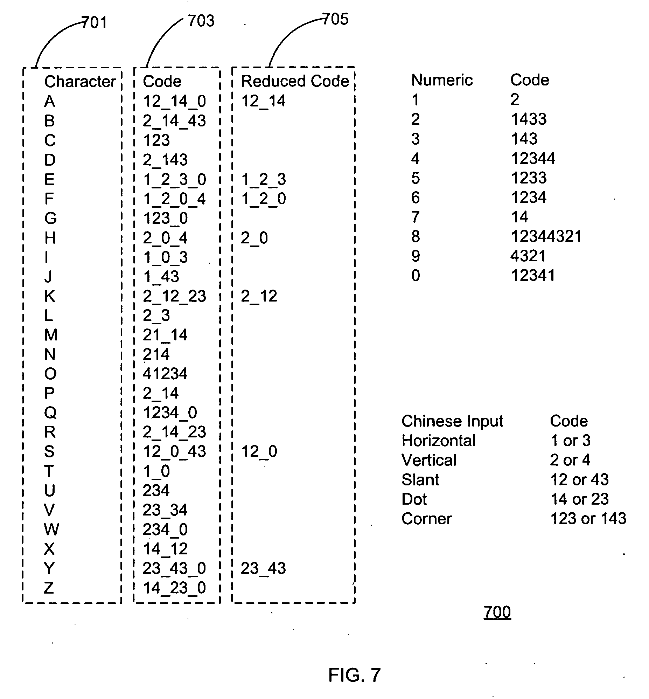

In an embodiment of the invention, circular input device 101 may be further partitioned to specify central touch input key 205. The user enters a numerical value of "0" into the numerical sequence when the user presses central touch input key 205. An exemplary embodiment is shown in Figure 6 and 7.

### Mapping between Characters and Codes

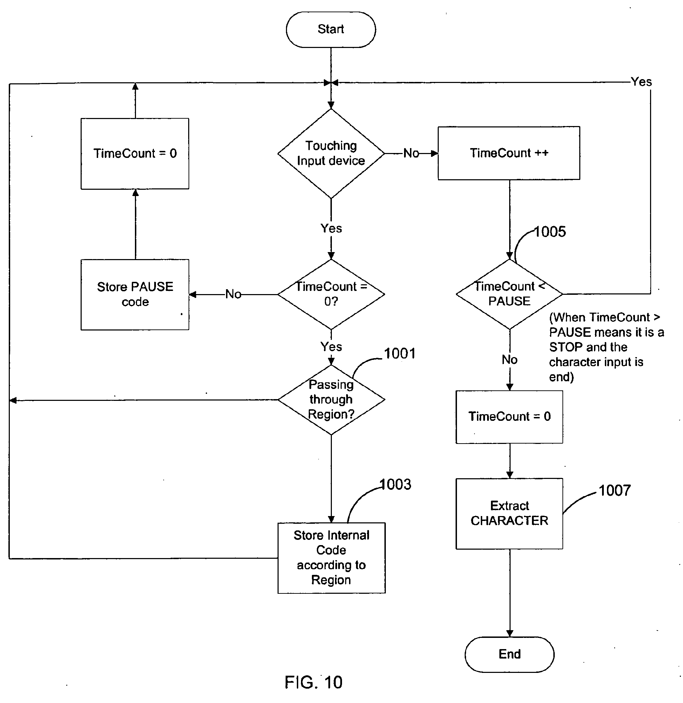

Figure 3 shows exemplary user scenarios 351-357 for inputting characters of the English language through circular input device 101 in accordance with an embodiment of the invention. Processor 103 processes a decoding algorithm (e.g., flow diagram 1000 as shown in Figure 10) to associate a unique code with each character. (However, embodiments of the invention support a code set in which a plurality of codes map to the same character.) With scenario 351, user inputs the character "A" by drawing input stroke 301 followed by input stroke 303. Because input strokes 301 and 303 are sufficiently separated, a time pause is detected by processor 103 and is denoted by "_" in the resulting sequence 361 {214_3}. Sequence 361 corresponds to the code for the alphabetical character "A".

With user scenario 353, the user draws input stroke 305, which is interpreted as sequence 363 {1, 4, 3}. Sequence 363 is the code for alphabetical character "I". With user scenario 355, the user draws input stroke 307, which is interpreted as sequence 365 {2}. Sequence 365 is the code for numerical character "1". With user scenario 357, the user draws input stroke 309 followed by input stroke 311, which is interpreted as sequence 367 {1, 4, 3, 3}. Sequence 367 is the code for numerical code "2". Because strokes 309 and 311 are closely drawn together, no time pause is detected.

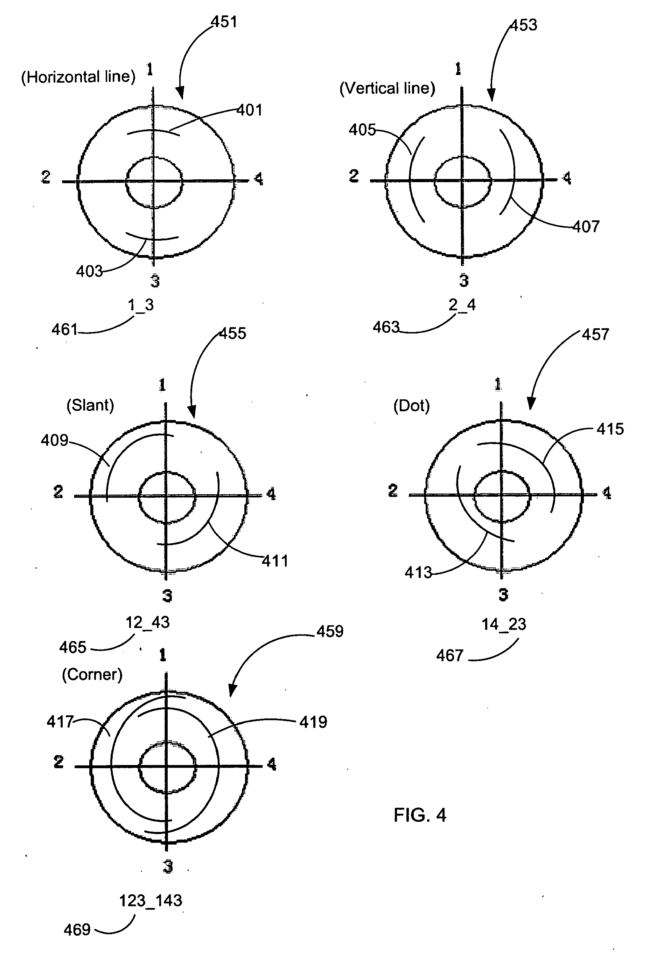

Figure 4 shows exemplary user scenarios 451-459 for inputting characters of the Chinese language through circular input device 101 in accordance with an embodiment of the invention. The selection of English, Chinese or other language can be done by a separate switch or by pressing anyone region with a predetermined period of time, e.g., 1 second. Because there are many alphabetical characters in the Chinese language, user interaction is facilitated by entering Chinese characters by inputting character strokes, where a Chinese character comprises a plurality of character strokes. An example is shown in Figure 9 as will be discussed. An embodiment of the invention provides a decoding method for the five strokes Chinese input method, in which character strokes are inputted. Character strokes include vertical lines, horizontal lines, downward slanted lines, dots (upward slanted lines), and corners. Usually the selection of different Chinese characters can be shown on the screen after the first few strokes of input to facilitate the easy entry of Chinese characters. The user is allowed to continue to input the strokes or by pressing any region for a predetermined period of time, e.g., one second, to activate the selection process.

Figure 4 shows a user entering different types of character strokes in order to input a Chinese character. Note, however, that Figure 4 does not show a specific Chinese character being entered. (An example of entering a specific Chinese character is shown in Figure 9.)

With user scenario 451, a user draws stroke 401 followed by stroke 403 on circular input device 101. Processor 103 interprets the sequence as {1 or 3}, which corresponds to a horizontal line character stroke. With user scenario 453, the user draws stroke 405 followed by stroke 407 on circular input device 101. Processor 103 interprets the sequence as {2 or 4}, which corresponds to a vertical line character stroke. With user scenario 455, the user draws stroke 409 followed by stroke 411 on circular input device 101. Processor 103 interprets the sequence as {12 or 43}, which corresponds to a slanted line character stroke. With user scenario 457, the user draws stroke 413 followed by stroke 415 on circular input device 101. Processor 103 interprets the sequence as {14 or 23}, which corresponds to a dot character stroke. With user scenario 459, the user draws stroke 417 followed by stroke 419 on circular input device 101. Processor 103 interprets the sequence as {123 or 143}, which corresponds to a corner character stroke.

Each input stroke forms a unique code that is recognized by processor 103. Codes for alphabetical characters and numerical characters are unique, and thus no selection is needed. For Chinese character input, some of the stroke codes are the same as English. Furthermore, unlike English characters, Chinese characters are formed by multiple input codes. Thus, the apparatus 100 supports entry of both English and Chinese characters by a selection mechanism as previously discussed. To activate the upper case mode, lower case mode, or Chinese entry mode, the user presses predefined locations of circular input device 101 for a sufficient time duration. For example, when the user presses the left side of circular input device 101 for 2 seconds, the circular input device 101 enters into mode upper case and Chinese entry mode. When the user presses the right side of circular input device 101 for 2 seconds, circular input device 101 enters into the lower case mode.

Embodiments of the invention support a circular input device, in which different languages may be supported. For example, English and Chinese may be supported by a user selecting an appropriate mode. Moreover, other languages may be supported, including different Indo-European languages.

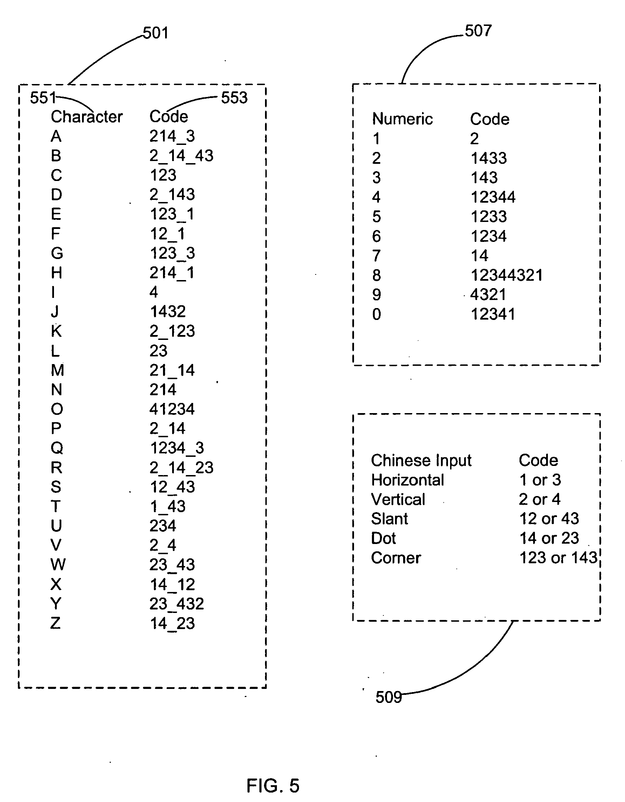

Figure 5 shows table 500 in which codes (comprising sequences) are associated with different characters in accordance with an embodiment of the invention. (Note that a time pause is designated by a "_".) Alphabetical characters 501 map each character 551 to code 553. Numerical characters 507 (which are numerically ordered) map numerical characters with corresponding codes. Also, Chinese character strokes 509 map to corresponding codes. As discussed above, the user enters input strokes through circular input device 101 without central input touch pad (e.g., central touch input key 205).

Figure 6 shows exemplary user scenarios 651-657 for inputting characters of the English language through circular input device 101 in accordance with an embodiment of the invention. With user scenarios 651-657, a user utilizes circular input device 101 that has a central input touch pad.

With user scenario 651, the user draws input strokes 601 and 603 and then presses center input touch pad 605. When the user presses center input touch pad 605, processor 103 translates the action by inserting a "0" into the corresponding sequence. Consequently, processor 103 translates user scenario 651 as sequence {12_14_0}, which is the code for character "A" as shown in Table 700 (Figure 7).

With user scenario 653, the user draws input stroke 607, presses center input touch pad 609, and then draws input stroke 611. Processor 103 translates user scenario 653 as sequence {1_0_3}, which is the code for character "A" as shown in Table 700 (Figure 7). User scenarios 655 and 657 are similar to user scenarios 355 and 357 (as shown in Figure 3) because the user does not press the center input touch pad in user scenarios 655 and 657 in order to enter numerical characters "1" and "2", respectively.

Figure 7 shows table 700 in which codes (comprising sequences) correspond to different characters in accordance with an embodiment of the invention. (Note that a time pause is designated by a "_".) Alphabetical characters 701 are mapped to codes 703. Moreover, some of the codes may be reduced (corresponding to reduced codes 705) by eliminating one or more numerical values in the sequence. In such a case, the reduced code provides a unique code for the character. (In other words, the eliminated numerical values merely provide redundant information.) In the embodiment, the mapping of Chinese character strokes and numerical characters to codes are the same as the mapping shown in Figure 5.

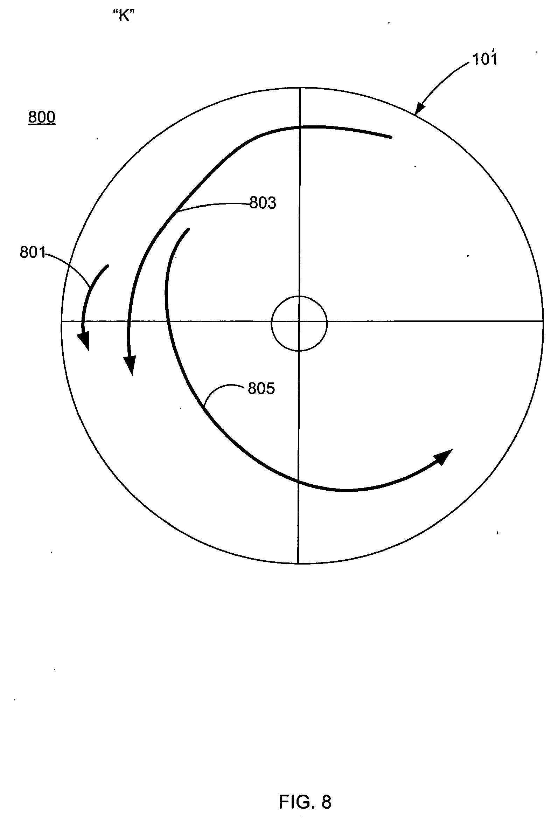

Figure 8 shows exemplary user scenario 800 illustrating code reduction in accordance with an embodiment of the invention. A user draws input strokes 801, 803, and 805 on circular input device 101, which is interpreted by processor 103 as sequence {2, _,1, 2, _, 2, 3}. The corresponding character is "K". With an embodiment of the invention, a code can be reduced by eliminating one or more numerical values in the sequence if the reduced code is unique with respect to the other codes. (In other words, the code contains redundant information and thus may be reduced.) The sequence may be reduced to {2,_, 1, 2} and maintain the uniqueness of the corresponding code for the character "K". Consequently, the user need only draw input strokes 801 and 803 to enter the character "K". However, with an embodiment of the invention if the user draws input stroke 805 after drawing input strokes 801 and 803, the character "K" is still recognized.

Figure 9 shows exemplary user scenario 900 for inputting character strokes 901a-911a with input strokes 901b-901b in accordance with an embodiment of the invention. User scenario 900 uses a mapping between character strokes and codes (which differs from the mappings shown in Figures 5 and 7):

| | |
|---|---|
| horizontal line | 1 |
| vertical line | 2 |
| slanted downward line | 12 |
| corner | 123 |
| dot and slanted upward | 14 |

A user draws input stroke 901b to enter horizontal character stroke 901a. The user then draws input stroke 903b to enter slanted downward stroke 903a. The user subsequently draws input strokes 905b, 907b, 909b, and 911b to enter vertical stroke 905a, corner stroke 907a, horizontal stroke 909a, and horizontal stroke 911a. The six character strokes form the corresponding Chinese character.

### Processing of Input Strokes

Figure 10 shows flow diagram 1000 for obtaining input strokes through circular input device 101 and for determining a code of a character in accordance with an embodiment of the invention. In flow diagram 1000, counter TimeCount measures a time duration in which a user is not touching circular input device 101. In step 1001, processor 103 detects at least one input stroke from circular input device 101 and obtains corresponding numerical values in step 1003. The obtained numerical values are used to determine a sequence. Step 1005 determines whether TimeCount exceeds a predetermined value (PAUSE). If so, process 1000 extracts a character in step 1007 by matching a code (corresponding to the obtained numerical values) to the character. If TimeCount does not exceed the predetermined value, process 1000 inputs additional input strokes to obtain additional numerical values for determining the code.

While not shown in flow diagram 1000, processor 103 may determine that an error condition has occurred, e.g., an undefined code has been detected. In such a case, processor 103 may take corrective actions such as deleting the obtained sequence and resetting circular input device.

Flow diagram 1000 may be extended for obtaining input strokes through circular input device 101 and determining character strokes (e.g. Chinese character strokes when in Chinese entry mode) in accordance with an embodiment of the invention. When in the Chinese entry mode, processor 103 detects at least one input stroke from circular input device 101 and obtains the corresponding numerical values (forming a sequence). Processor 103 determines the corresponding to a character stroke (e.g., a vertical line) and determines whether a character is specified by the obtained character strokes (e.g. character strokes 901a-911a as shown in Figure 9). If so, processor 103 extracts the character from the obtained character strokes. Otherwise, processor 103 continues to input additional input strokes from circular input device 101.

As can be appreciated by one skilled in the art, a computer system with an associated computer-readable medium containing instructions for controlling the computer system can be utilized to implement the exemplary embodiments that are disclosed herein. The computer system may include at least one computer such as a microprocessor, digital signal processor, and associated peripheral electronic circuitry.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for inputting a character with a circular input device (101), comprising:
(a) partitioning the circular input device into a plurality of regions (201, 202, 203, 204, 205);
(b) detecting a first input stroke from the circular input device (101), the first input stroke traversing at least one region of the plurality of regions (201, 202, 203, 204, 205);
(c) obtaining a corresponding numerical value corresponding to a corresponding region, the corresponding region being one of the at least one region; and
(d) when in a first input mode, repeating (b)-(c) until a first code (553; 703) is obtained, the first code comprising a first sequence of numerical values.

2. The method of claim 1, further comprising:
determining a first character from the first code (553; 703).

3. The method of claim 1 or 2, further comprising:
(e) detecting a second input stroke from the circular input device (101), the second input stroke traversing the at least one region of the plurality of regions (201,202,203,204,205);
(f) obtaining an associated numerical value associated with an associated region, the associated region being one of the at least one region;
(g) when in a second input mode, repeating (e)-(f) until a second code is obtained, the second code comprising a second sequence of numerical values, the second code representing a character stroke; and
(h) repeating (g) to obtain a plurality of character strokes.

4. The method of claim 3, further comprising:
(i) determining a second character from the plurality of character strokes.

5. The method of claim 2, 3 or 4, wherein the first character is contained in the English language alphabet.

6. The method of claim 4, wherein the second character is contained in the Chinese language alphabet.

7. The method of any preceding claim, (a) comprising:
(a)(i) partitioning the circular input device (101) into at least four regions, a first region (201) having a first angular area that is associated with a first numerical value, a second region (202) having a second angular area that is associated with a second numerical value, a third region (203) having a third angular area that is associated with a third numerical value, and a fourth region (204) having a fourth angular area that is associated with a fourth numerical value.

8. The method of claim 7, (a) further comprising:
(a)(ii) partitioning the circular input device into a fifth region (205), the fifth region being in a center portion of the circular input device and being associated with a fifth numerical value.

9. The method of claim 7 or 8, wherein each member of the first sequence of numerical values has a value selected from the group consisting of the first numerical value, the second numerical value, the third numerical value, and the fourth numerical value.

10. The method of any preceding claim, further comprising:
detecting an error condition from the first code.

11. The method of any preceding claim , further comprising:
detecting a time pause between the input strokes; and
including an indicator in the first code to signify the time pause.

12. The method of any preceding claim, further comprising:
displaying an extrusion lines on the circular input device to reference one of the plurality of regions.

13. The method of any preceding claim, further comprising:
selecting an input mode from an input indication, the input indication being associated with one of the plurality of regions.

14. The method of any preceding claim, the first code being discernable from another code regardless of a direction of the first input stroke.

15. The method of any preceding claim, further comprising:
reducing a number of members in the first sequence of numerical values.

16. An apparatus supporting a user entering input information, comprising:
a circular input device (101) capturing input stroke information;
a processing unit obtaining the input stroke information from the circular input device (101) and configured to perform:
(a) partitioning the circular input device into a plurality of regions (201, 202, 203, 204, 205);
(b) detecting a first input stroke from the circular input device (101), the first input stroke traversing at least one region of the plurality of regions (201, 202, 203, 204, 205);
(c) obtaining a corresponding numerical value corresponding to a corresponding region, the corresponding region being one of the at least one region;
(d) when in a first input mode, repeating (b)-(c) until a first code (553; 703) is obtained, the first code comprising a first sequence of numerical values; and
(e) extracting a first character from the first code (553; 703).

17. The apparatus of claim 16, wherein the processing unit is further configured to perform:
(f) detecting a second input stroke from the circular input device (101), the second input stroke traversing the at least one region of the plurality of regions (201, 202, 203, 204, 205);
(g) obtaining an associated number associated with an associated region, the associated region being one of the at least one region;
(h) when in a second input mode, repeating (f)-(g) until a second code is obtained, the second code comprising a second set of numerical values, the second code representing a character stroke; and
(i) repeating (h) until a second character is obtained, the second character having a plurality of character strokes.

18. A computer-readable medium having computer-executable instructions comprising:
(a) partitioning the circular input device into a plurality of regions;
(b) detecting a first input stroke from the circular input device, the first input stroke traversing at least one region of the plurality of regions;
(c) obtaining a corresponding numerical value corresponding to a corresponding region, the corresponding region being one of the at least one region;
(d) when in a first input mode, repeating (b)-(c) until a first code is obtained, the first code comprising a first sequence of numerical values; and
(e) extracting a first character from the first code.

19. The computer-readable medium of claim 18, further comprising:
(f) detecting a second input stroke from the circular input device, the second input stroke traversing the at least one region of the plurality of regions;
(g) obtaining an associated numerical value associated with an associated region, the associated region being one of the at least one region;
(h) when in a second input mode, repeating (f)-(g) until a second code is obtained, the second code comprising a second sequence of numerical values, the second code representing a character stroke; and
(i) repeating (h) until a second character is obtained, the second character having a plurality of character strokes.
A computer-readable medium having computer-executable instructions comprising the method of any of claims 1-15.

20. A method for inputting a character with a circular input device (101), comprising:
(a) partitioning the circular input device (101) into a plurality of regions (201, 202, 203, 204, 205);
(b) when an input mode corresponds to English language characters, performing:
(b)(i) detecting a first input stroke from the circular input device (101), the first input stroke traversing at least one region of the plurality of regions (201, 202, 203, 204, 205);
(b)(ii) obtaining a corresponding numerical value corresponding to a corresponding region, the corresponding region being one of the at least one region; and
(b)(iii) repeating (b)(i)-(b)(ii) until a first code is obtained (553; 703), the first code comprising a first sequence of numerical values; and
(b)(iv) determining an English language character from the first code (553; 703); and
(c) when an input mode corresponds to Chinese language characters, performing:
(c)(i) detecting a second input stroke from the circular input device, the second input stroke traversing the at least one region of the plurality of regions;
(c)(ii) obtaining an associated numerical value associated with an associated region, the associated region being one of the at least one region;
(c)(iii) repeating (c)(i)-(c)(ii) until a second code is obtained, the second code comprising a second sequence of numerical values, the second code representing a character stroke;
(c)(iv) repeating (c)(iii) to obtain a plurality of character strokes; and
(c)(v) determining a Chinese language character from the plurality of character strokes.
